# EUROPEAN PATENT SPECIFICATION

(11) **EP 2 675 593 B1**
(45) Date of publication and mention of the grant of the patent: **08.07.2015**
(21) Application number: 12708429.1
(22) Date of filing: 17.02.2012
(51) Int. Cl.: B25B 21/00, B25B 23/00, B23P 19/06, B25H 1/00

(54) **APPARATUS FOR TIGHTENING THREADED FASTENERS**
VORRICHTUNG ZUM ANZIEHEN VON BEFESTIGUNGSSCHRAUBEN
APPAREIL PERMETTANT DE RESSERRER DES ÉLÉMENTS DE FIXATION FILETÉS

(30) Priority: 17.02.2011 US 201161443736 P
(43) Date of publication of application: 25.12.2013
(73) Proprietor: Hytorc Division Unex Corporation, Mahwah, NJ 07430 (US)
(72) Inventor: BONAS, Calvin, A., Bronx, NY 10454 (US)
(74) Representative: Fuchs Patentanwälte Partnerschaft mbB
(86) International application number: PCT/US2012/025747
(87) International publication number: WO 2012/112960

(56) References cited:
- EP-A2- 1 428 972
- US-A- 2 737 065
- US-A- 5 791 619
- US-A1- 2010 269 645

## Description

Novel reaction fixtures and adaptors are known through recent patent application disclosures and applied to inverted applications such as for example underground mining, excavation and tunneling operations. Need exists for novel reaction fixture solutions for inverted socket head cap screw (SHCS) bolting applications, particularly joint closure at main stop valve (MSV) pressure seal heads.

Current methods require heavy and bulky equipment to hold the flange and torque power tools up to the joint-to-be-closed to tighten or loosen the threaded fasteners. Other methods include suspending the necessary equipment from adjacent structures, using articulated arms or other support fixtures. Often several operators are needed to carry out one tightening or loosening operation, which may take several hours of challenging work. Operator injuries also are prevalent.

US 5,791,619 is directed to a tool suspension arm having a housing defining an axially extensive cavity open at one end. An axially extensive rod is received by the axially extensive cavity through the open end for slidable axial movement relative to the housing. The axially extensive rod is splined and is closed in the axially extensive cavity of the housing by a splined hub insert inserted over the axially extensive rod into the open end of the axially extensive cavity.

The invention described in US 2,737,065 relates to tool attachments and more particularly to an attachment wherein a conventional power driven hand drill may be utilized in the manner of a portable or stationary drill press.

EP 1 428 972 A2 discloses an apparatus comprising a drill and an arrangement of rods that can be axially displaced and positioned along a bottom of a building by means of a drive device. The apparatus further includes a holder for the drill and is provided with an end portion and an elastic support member, preferably including a spiral spring. Under force a supporting member is pressed against the the roof of the building by moving the arrangement of rods.

What are needed are reaction mechanisms which overcome the deficiencies of the prior art.

The present invention has therefore been devised to address these issues.

Apparatus for use with a tool assembly in operations of tightening or loosening threaded fasteners about an axis are disclosed, and in one example includes: a lower clamp assembly; an upper clamp assembly; a reaction adaptor assembly; and a spring assembly formed between the upper clamp assembly and the reaction adaptor assembly. Advantageously an operator can tighten or loosen all fasteners without having to change the initial setup.of the apparatus. The lower clamp assembly eliminates the need for extra operators and heavy and bulky equipment to hold the apparatus near the fasteners. The upper clamp allows the operator to rotate the apparatus around with ease. The spring assembly stabilizes and eases vertical height adjustment of the apparatus. The reaction adaptor substantially negates reaction turning forces of the tool assembly during the operations. Drive knobs provide easy alignment of and quick and safe mounting of the tool assembly on the fasteners. Bolting operations about an axis are completed faster, cheaper and with little or no risk of operator injury.

For a fuller understanding of the nature and advantages of the present invention, as well as the preferred mode of use, reference should be made to the following detailed description read in conjunction with the accompanying drawings:
FIG. 1 is a bottom-up perspective view of an embodiment of the present invention;
FIG. 2 is a side view of FIG. 1;
FIG. 3 is a second side view of FIG. 1;
FIG. 4 is a larger view of FIG. 2; and
FIG. 5 is a top-down perspective view of FIG. 1.

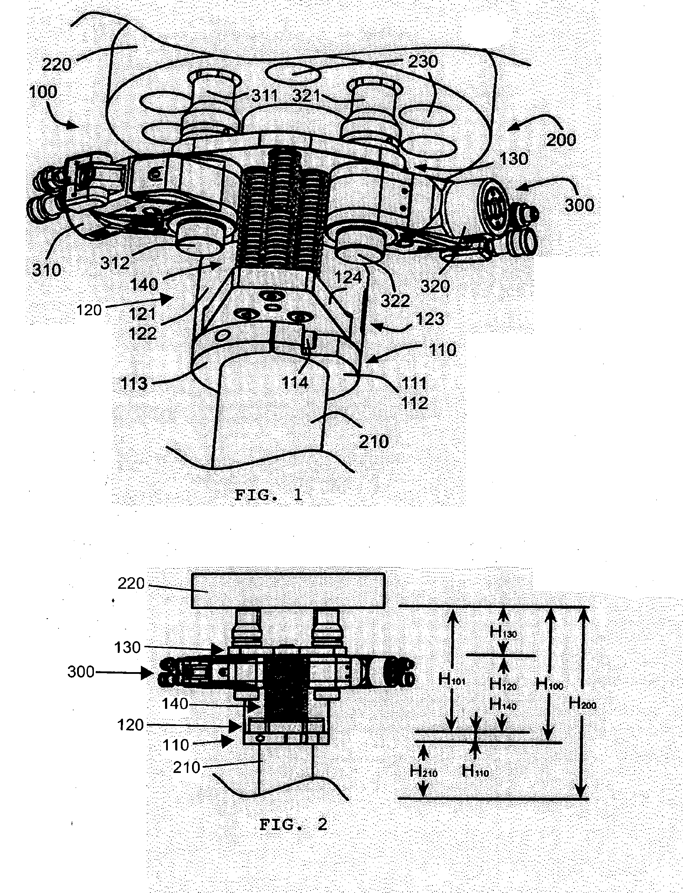

Referring to FIG. 1, by way of example, shows first aspect of the invention. We provide an apparatus 100 for reaction-free and hands-free tightening and loosening of threaded fasteners 230 at a location 200, an inverted SHCS joint closure 201 at a MSV pressure seal head 202. Location 200 includes a pipe stem 210, a flange 220, and fasteners, or SHCSs 230.

Apparatus 100 includes a lower clamp assembly 110, an upper clamp assembly 120, a reaction adaptor assembly 130 and a spring assembly 140 formed between upper clamp assembly 120 and reaction adaptor assembly 130. Lower clamp assembly 110, such as for example a fixed clamp, includes an annular hollow body 111 which has a first portion 112 and a second portion 113. First and second portions 112 and 113 are connected on one side by a hinge (not shown) and connected on the other side by a closing mechanism 114, such as for example a setscrew. Lower clamp assembly 110 is non-rotatably connected to and may have an interference fit against pipe stem 210 which prevents vertical and rotational movement upon installation. It supports the weight of the rest of apparatus 100 and tool assembly 300 which includes tools 310 and 320 and other ancillary components including hex sockets 311 and 321 and drive knobs 312 and 322. Lower clamp assembly 110 is used to set apparatus 100 and tool assembly 300 at a pre-determined height H₁₀₀ needed to engage male hex sockets 311 and 321 in the cap screws of fasteners 230. Note that lower clamp assembly 110 has a height H₁₁₀. Lower clamp assembly 110 makes the apparatus hands free after setup.

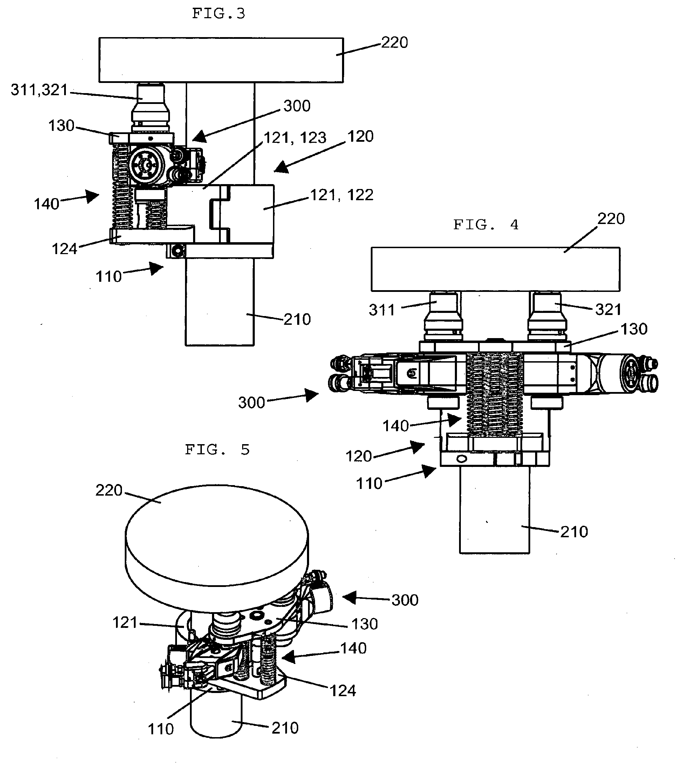

Upper clamp assembly 120, such as for example an adjustable clamp, includes an annular hollow body 121 which has a first portion 123 and a second portion 122. First portion 123 includes a platform 124. First and second portions 123 and 122 are connected in a similar manner as first and second portions 112 and 113 of lower clamp assembly 110. As shown in FIG. 3, hinge 126 connects first and second portions 123 and 122. Upper clamp assembly 120 is rotatably connected to pipe stem 210 by tightening a closing mechanism (not shown in the FIGs.), such as for example a setscrew. This closure results in a loose tolerance which allows upper clamp assembly 120 to rotate around the axis of pipe stem 210. Upper clamp assembly rests also on yet is also rotatable around lower clamp assembly 110. Upper clamp assembly 120 is used to set apparatus 100 and tool assembly 300 at a pre-determined height H₁₂₀ needed to engage male hex sockets 311 and 321 in the cap screws of fasteners 230. Note that annular hollow body 121 has a height H₁₂₁. Note that platform 124 may be formed as any suitable shape and with any suitable dimension, and in this case is formed as a trapezoid.

Reaction adaptor assemblies are thoroughly disclosed and discussed in commonly owned international patent application PCT/US10/032139, having filing date of April 23, 2010, that is entitled "Apparatus for Tightening or Loosening Fasteners" (the '139 Application), an entire copy of which is incorporated herein by reference. Such reaction adaptor assemblies are used in commerce under Applicant's trade name TWIN TORQUE^{®}. Reaction adaptor assembly 130, a type similar to those described in the '139 Application, connects tools 310 and 320 such that the reaction forces created during operation are absorbed and cancel one another. The torque being applied to fasteners 230, and therefore the reaction forces, are substantially equal and opposite. Note that that various changes, combinations, alterations, and variations of aspects of the '139 Application may be used in conjunction with the present invention.

Formed between and connecting platform 124 of upper clamp assembly 120 and reaction adaptor assembly 130 is a spring assembly 140. Spring assembly 140 includes three spring coils with telescoping cores which allows reaction adaptor assembly 130 and therefore tools 310 and 320 and other ancillary components including hex sockets 311 and 321 and drive knobs 312 and 322 to move up and down. Spring assembly 140 keeps constant pressure on reaction adaptor assembly 130 and therefore tool assembly 300 to maintain engagement of male hex sockets 311 and 321 and SHCSs 230 at location 200. Furthermore spring assembly 140 allows male hex sockets 311 and 321 to be removed from SHCSs 230 upon loosening. An operator is able to remove male hex sockets 311 and 321 from one set of SHCSs 230 and rotate and replace the sockets onto another set of SHCSs 230. The operator can thus tighten all the SHCSs 230 at location 200 without having to change the initial setup.

FIG. 2 shows various heights associated with apparatus 100. H₁₀₀ indicates the distance between a lower face of lower clamp assembly 110 and a lower face of flange 220. H₁₁₀ indicates the height of lower clamp assembly 110. H₁₂₀ indicates the height of upper clamp assembly 120. H₁₃₀ indicates the distance between a lower face of reaction assembly 130 and a lower face of flange 220. H₁₄₀ indicates the variable height of spring assembly 140. Note that H₂₀₀ and H₂₁₀ are arbitrary distances dependent on characteristics further along pipe stem 210.

During installation of apparatus 100 and tool assembly 300 about location 200, the operator installs lower clamp assembly 110 at pre-determined height H₁₀₀ from flange 220. The operator then installs upper clamp assembly 120. Spring assembly 140 is installed between platform 124 of upper clamp assembly 120 and reaction adaptor assembly 130. Tools 310 and 320 are attached to reaction adaptor assembly 130 and male hex sockets 311 and 321 are installed on the drive shafts of the tools. The operator performs the reverse of this installation process to uninstall apparatus 100 and tool assembly 300 from location 200.

During operation of apparatus 100 the operator orients male hex sockets 311 and 321 with the female hex engagements of two of SHCSs 230 using drive knobs 312 and 322. Drive knobs 312 and 311 allow the operator to turn and position reaction adaptor assembly 130 without removing tools 310 and 320. These hexes, once aligned and positioned, will keep their engagement with the selected two SHCSs 230. The operator then tightens or loosens the selected two SHCSs 230 as desired. The operator disengages male hex sockets 311 and 321 from the selected two SHCSs 230 by applying pressure to spring assembly 140 then rotates upper clamp assembly 120 and therefore all other attached components to fit two other SHCSs 230 on flange 220. The operator repeats this operation process until all SHCS 230 are tightened or loosened.

Apparatus 100 includes: lower clamp assembly 110; upper clamp assembly 120; reaction adaptor assembly 130; and spring assembly 140 formed between upper clamp assembly 120 and reaction adaptor assembly 130. Advantageously the operator can tighten or loosen all of SHCSs 230 at location 200 without having to change the initial setup.of apparatus 100. Lower clamp assembly 110 eliminates the need for extra operators and heavy and bulky equipment to hold apparatus near location 200. Upper clamp 120 allows the operator to rotate apparatus 100 around pipe stem 210 with ease. Spring assembly 140 stabilizes and eases vertical height adjustment of apparatus 100. Reaction adaptor 130 substantially negates reactionturning forces of tool assembly 300 during the operations. Drive knobs 312 and 322 provide easy alignment of and quick and safe mounting of tool assembly 300 on SHCSs 230. Bolting operations about an axis are completed faster, cheaper and with little or no risk of operator injury.

Apparatus 100 is described in this specification for use with inverted SHCS bolting applications, particularly joint closure at MSV pressure seal heads. Apparatus 100, and modifications thereof, may be used with many other bolting applications.

## Claims

1. An apparatus for use with a tool assembly (300) in operations of tightening or loosening threaded fasteners (230) about an axis including:
a lower clamp assembly (110);
an upper clamp assembly (120);
a reaction adaptor assembly (130) including a force transmitting element to substantially negate reaction turning forces of the tool assembly (300) during the operations; and
a spring assembly (140) formed between the upper clamp assembly (120) and the reaction adaptor assembly (130)
wherein the lower clamp assembly (110) is non-rotatably connectable about the axis;
the upper clamp assembly (120) is rotatably connectable about the axis and the lower clamp assembly (110);
the reaction adaptor assembly (130) is non-rotatably connectable to and vertically positionable from the upper clamp assembly (120) by the spring assembly (140); and
the tool assembly (300) is non-rotatably connectable to the reaction adaptor assembly (130) and rotatably connectable to the fasteners (230).

2. An apparatus according to claim 1 wherein the lower clamp assembly (110) includes an annular hollow body (111) having a first portion (112) and a second portion (113) which are connected by a first closing mechanism and a second closing mechanism.

3. An apparatus according to any preceding claim wherein the upper clamp assembly (120) includes an annular hollow body (121) having a first portion (123), a second portion (122) and a platform (124) of the first portion (123) which are connected by a first closing mechanism and a second closing mechanism.

4. An apparatus according to any preceding claim wherein the lower clamp assembly (110), the upper clamp assembly (120), the reaction adaptor assembly (130), the spring assembly (140) and the tool assembly (300) are attachable separately, individually and independently to each other.

5. An apparatus according to any preceding claim wherein the reaction adaptor assembly (130) includes:
a first force-transmitting element either rotatably attachable about, extensibly and retractably attachable along, or rotatably attachable about and extensibly and retractably attachable along a first turning force axis of the tool assembly (300);
a second force-transmitting element either rotatably attachable about, extensibly and retractably attachable along, or rotatably attachable about and extensibly and retractably attachable along a second turning force axis of the tool assembly (300); and
wherein the first and second elements, when connected, substantially negate reaction turning forces of the tool assembly (300) during the operations.

6. An apparatus for conducting operations of tightening or loosening threaded fasteners (230) about and axis including:
an apparatus for use in such operations according to one of the preceding claims
a tool assembly (300) non-rotatably connectable to the reaction adaptor assembly (130) and rotatably connectable to the fasteners (230).

7. An apparatus according to claim 6 wherein the tool assembly (300) includes:
a first and a second receiving member, rotatably supported in the tool assembly (300), for receiving a first and a second fastener (230);
a first and a second device for positioning of the respective receiving members to non-rotatably engage the respective fasteners (230); and
a first and a second device for effecting rotation of the respective receiving members to tighten or loosen the respective fasteners (230).

8. An apparatus according to claim 6 or 7 including a device for controlling the tool assembly (300) to maintain a difference between operation parameters of respective fasteners (230) within a predetermined value.

9. An apparatus according to one of the claims 6 to 8 wherein the tool assembly (300) is either pneumatically, electrically, hydraulically or manually driven.

## Patentansprüche

1. Vorrichtung zum Verwenden mit einer Werkzeuganordnung (300) im Betrieb zum Festziehen oder Lösen von Befestigungsschrauben (230) um eine Achse, umfassend:
eine untere Klemmanordnung (110);
eine obere Klemmanordnung (120);
eine Reaktionsadapteranordnung (130), welche ein Kraftübertragungselement zum im Wesentlichen Aufheben von Reaktionsdrehkräften der Werkzeuganordnung (300) während des Betriebs umfasst; und
eine Federanordnung (140), welche zwischen der oberen Klemmanordnung (120) und der Reaktionsadapteranordnung (130) ausgebildet ist;
wobei die untere Klemmanordnung (110) nicht-drehbar um die Achse verbindbar ist;
die obere Klemmanordnung (120) drehbar um die Achse und um die untere Klemmanordnung (110) verbindbar ist;
die Reaktionsadapteranordnung (130) nicht-drehbar mit der oberen Klemmanordnung (120) verbindbar und vertikal von der oberen Klemmanordnung (120) mittels der Federanordnung (140) positionierbar ist; und
die Werkzeuganordnung (300) nicht-drehbar mit der Reaktionsadapteranordnung (130) und drehbar mit den Befestigungsschrauben (230) verbindbar ist.

2. Vorrichtung nach Anspruch 1, wobei die untere Klemmanordnung (110) einen ringförmigen Hohlkörper (111) mit einem ersten Abschnitt (112) und einem zweiten Abschnitt (113) beinhaltet, welche mittels eines ersten Verschlussmechanismus und eines zweiten Verschlussmechanismus verbunden sind.

3. Vorrichtung nach einem der vorherigen Ansprüche, wobei die obere Klemmanordnung (120) einen ringförmigen Hohlkörper (121) mit einem ersten Abschnitt (123), einem zweiten Abschnitt (122) und einer Plattform (124) des ersten Abschnitts (123), welche mit einem ersten Verschlussmechanismus und einem zweiten Verschlussmechanismus verbunden sind.

4. Vorrichtung nach einem der vorherigen Ansprüche, wobei die untere Klemmanordnung (110), die obere Klemmanordnung (120), die Reaktionsadapteranordnung (130), die Federanordnung (140) und die Werkzeuganordnung (300) separat, einzeln und unabhängig voneinander anbringbar sind.

5. Vorrichtung nach einem der vorherigen Ansprüche, wobei die Reaktionsadapteranordnung (130) beinhaltet:
ein erstes Kraftübertragungselement, welches entweder drehbar anbringbar um,
ausziehbar und einschiebbar entlang oder drehbar aufsetzbar um und ausziehbar und einschiebbar entlang einer ersten Drehkraftachse der Werkzeuganordnung (300) ist,
ein zweites Kraftübertragungselement, welches entweder drehbar anbringbar um, ausziehbar und einschiebbar entlang oder drehbar aufsetzbar um und ausziehbar und einschiebbar entlang einer zweiten Drehkraftachse der Werkzeuganordnung (300) ist, und
wobei die ersten und zweiten Elemente im Wesentlichen die Reaktionsdrehkräfte der Werkzeuganordnung (300) im Betrieb aufheben.

6. Vorrichtung zum Durchführen des Betriebs zum Festziehen oder Lösen von Befestigungsschrauben (230) um eine Achse, beinhaltend:
eine Vorrichtung zum Verwenden in einem derartigen Betrieb nach einem der vorherigen Ansprüche, und
eine Werkzeuganordnung (300), die nicht-drehbar mit der Reaktionsadapteranordnung (130) und drehbar verbindbar mit den Befestigungsschrauben (230) ist.

7. Vorrichtung nach Anspruch 6, wobei die Werkzeuganordnung (300) beinhaltet:
einen ersten und einen zweiten Aufnahmekörper, die drehbar in der Werkzeuganordnung (300) gelagert sind, zum Aufnehmen einer ersten und zweiten Befestigungsschraube (230);
eine erste und eine zweite Vorrichtung zum Positionieren der entsprechenden Aufnahmekörper zum nicht-drehbaren Eingreifen der entsprechenden Befestigungsschrauben (230); und
eine erste und eine zweit Vorrichtung zum Durchführen einer Drehung der entsprechenden Aufnahmekörper zum Befestigen oder Lösen der entsprechenden Befestigungsschrauben (230).

8. Vorrichtung nach Anspruch 6 oder 7, beinhaltend eine Vorrichtung zum Steuern oder Regeln der Werkzeuganordnung (300), um eine Differenz zwischen den Betriebsparametern der entsprechenden Befestigungsschrauben (230) innerhalb eines vorbestimmten Wertes zu halten.

9. Vorrichtung nach einem der Ansprüche 6 bis 8, wobei die Werkzeuganordnung (300) entweder pneumatisch, elektrisch hydraulisch oder manuell angetrieben wird.

## Revendications

1. Appareil destiné à être utilisé avec un ensemble d'outil (300) pour des opérations de serrage ou de desserrage d'éléments de fixation vissés (230) autour d'un axe incluant :
un ensemble d'attache inférieur (110),
un ensemble d'attache supérieur (120),
un ensemble d'adaptateur de réaction (130) incluant un élément de transmission de force destiné à s'opposer globalement à des forces tournantes de réaction de l'ensemble d'outil (300) durant les opérations, et
un ensemble de ressort (140) formé entre l'ensemble d'attache supérieur (120) et l'ensemble d'adaptateur de réaction (130)
dans lequel l'ensemble d'attache inférieur (110) peut être connecté sans possibilité de rotation autour de l'axe,
l'ensemble d'attache supérieur (120) peut être connecté avec possibilité de rotation autour de l'axe et de l'ensemble d'attache inférieur (110),
l'ensemble d'adaptateur de réaction (130) peut être connecté sans possibilité de rotation à l'ensemble d'attache supérieur (120) et être positionné verticalement par rapport à celui-ci au moyen de l'ensemble de ressort (140), et
l'ensemble d'outil (300) peut être connecté sans possibilité de rotation à l'ensemble d'adaptateur de réaction (130) et être connecté avec possibilité de rotation aux éléments de fixation.

2. Appareil selon la revendication 1 dans lequel l'ensemble d'attache inférieur (110) inclut un corps creux annulaire (111) ayant une première partie (12) et une deuxième partie (113) qui sont connectées par un premier mécanisme de fermeture et un deuxième mécanisme de fermeture.

3. Appareil selon l'une quelconque des revendications précédentes dans lequel l'ensemble d'attache supérieur (120) inclut un corps creux annulaire (121) ayant une première partie (123), une deuxième partie (122) et une plate-forme (124) de la première partie (123) qui sont connectées par un premier mécanisme de fermeture et un deuxième mécanisme de fermeture.

4. Appareil selon l'une quelconque des revendications précédentes dans lequel l'ensemble d'attache inférieur (110), l'ensemble d'attache supérieur (120), l'ensemble d'adaptateur de réaction (130), l'ensemble de ressort (140) et l'ensemble d'outil (300) peuvent être fixés séparément, individuellement et indépendamment les uns des autres.

5. Appareil selon l'une quelconque des revendications précédentes dans lequel l'ensemble d'adaptateur de réaction (130) inclut :
un premier élément de transmission de force soit pouvant être fixé avec possibilité de rotation autour, pouvant être fixé de façon extensible et rétractable le long d'un premier axe de forces tournantes de l'ensemble d'outil (300), soit pouvant être fixé avec possibilité de rotation autour et pouvant être fixé de façon extensible et rétractable le long d'un premier axe de forces tournantes de l'ensemble d'outil (300),
un deuxième élément de transmission de force soit pouvant être fixé avec possibilité de rotation autour, pouvant être fixé de façon extensible et rétractable le long d'un deuxième axe de forces tournantes de l'ensemble d'outil (300), soit pouvant être fixé avec possibilité de rotation autour et pouvant être fixé de façon extensible et rétractable le long d'un deuxième axe de forces tournantes de l'ensemble d'outil (300),
dans lequel les premier et deuxième éléments, lorsqu'ils sont connectés, s'opposent globalement aux forces tournantes de réaction de l'ensemble d'outil (300) au cours des opérations.

6. Appareil destiné à réaliser des opérations de serrage ou de desserrage des éléments de fixation vissés (230) autour d'un axe incluant :
un appareil destiné à être utilisé pour de telles opérations selon l'une quelconque des revendications précédentes
un ensemble d'outil (300) pouvant être connecté sans possibilité de rotation à l'ensemble d'adaptateur de réaction (130) et pouvant être connecté avec possibilité de rotation aux éléments de fixation (230).

7. Appareil selon la revendication 6 dans lequel l'ensemble d'outil (300) inclut :
un premier et un deuxième éléments de réception, supportés avec possibilité de rotation dans l'ensemble d'outil (300), pour recevoir un premier et un deuxième éléments de fixation (230),
un premier et un deuxième dispositifs destinés à positionner les éléments de réception respectifs pour un engagement sans possibilité de rotation avec les éléments de fixation respectifs (230), et
un premier et un deuxième dispositifs destinés à effectuer une rotation des éléments de réception respectifs pour serrer ou desserrer les éléments de fixation respectifs (230).

8. Appareil selon la revendication 6 ou 7 incluant un dispositif destiné à contrôler l'ensemble d'outil (300) pour maintenir une différence entre des paramètres opérationnels des éléments de fixation respectifs (230) dans les limites d'une valeur prédéterminée.

9. Appareil selon l'une quelconque des revendications 6 à 8 dans lequel l'ensemble d'outil (300) est soit pneumatique, soit électrique, soit hydraulique, soit manuel.
